# EUROPEAN PATENT APPLICATION

(11) **EP 4 783 414 A1**
(43) Date of publication of application: **29.07.2026**
(21) Application number: 25822878.2
(22) Date of filing: 22.08.2025
(51) Int. Cl.: H02J 7/35, H02J 7/00

(54) **PHOTOVOLTAIC CHARGING ACTIVATION CIRCUIT AND PHOTOVOLTAIC CHARGING SYSTEM**

(30) Priority: 26.09.2024 CN 202411348590
(71) Applicant: SHENZHEN POWEROAK NEWENER CO., LTD, Shenzhen, Guangdong 518000 (CN)
(72) Inventor: LEI, Jianhua, Shenzhen, Guangdong 518000 (CN); YOU, Yongliang, Shenzhen, Guangdong 518000 (CN); LI, Xiangzhuang, Shenzhen, Guangdong 518000 (CN); CHEN, Zhibin, Shenzhen, Guangdong 518000 (CN); LIN, Chengfang, Shenzhen, Guangdong 518000 (CN)
(74) Representative: Zacco Sweden AB
(86) International application number: PCT/CN2025/116269
(87) International publication number: WO 2026/066852

(57) **Abstract**

This application relates to a photovoltaic (PV) charging activation circuit and a PV charging system. The circuit includes an activation control module (2) and a signal output module (4). The activation control module (2) and the signal output module (4) are connected in series between a photovoltaic power source (300) and a battery management system (BMS, 500) in sequence. The signal output module (4) is further connected to a power supply (700). The activation control module (2) is configured to output a drive signal to the signal output module (4) when an output voltage of the photovoltaic power source (300) at a current time point is greater than a target voltage threshold and greater than an output voltage at a previous time point to allow the signal output module (4) to output an activation signal to the BMS (500) based on a power supply voltage of the power supply (700). The target voltage threshold is configured to characterize a minimum voltage required to activate the BMS (500). This circuit can avoid frequent output of activation signals when the output voltage of the PV power source fluctuates.

## Description

### CROSS-REFERENCE TO RELATED APPLICATION

The application claims priority to Chinese patent application No. 2024113485907 filed on September 26, 2024, and entitled with "PHOTOVOLTAIC CHARGING ACTIVATION CIRCUIT AND PHOTOVOLTAIC CHARGING SYSTEM", which is hereby incorporated by reference in its entirety.

### TECHNICAL FIELD

This application relates to the field of energy storage technology, and in particular to a photovoltaic charging activation circuit and a photovoltaic charging system.

### BACKGROUND

With the rapid development of lithium battery technology and power electronics technology, integrated photovoltaic and energy storage device has become a market hotspot. Charging via solar energy is one of the important functions of such products, and activating charging based on an output voltage of a photovoltaic power source is particularly crucial.

Existing solutions of activating charging based on the output voltage of the photovoltaic power source are limited and usually have complex circuits or obvious limitations. For example, when the output voltage of the photovoltaic power source is unstable or fluctuates, an activation signal will be frequently sent to a battery management system. Such an unstable activation mechanism not only increases the energy consumption of the system and reduces the efficiency of the entire energy storage system, but also affects the service life of the battery management system due to frequent starts and stops.

### SUMMARY

In view of this, it is necessary to provide a photovoltaic charging activation circuit and a photovoltaic charging system.

A first aspect of the application provides a photovoltaic charging activation circuit, including: an activation control module and a signal output module.

The activation control module and the signal output module are connected in series between a PV power source and a battery management system (BMS) in sequence, and the signal output module is further connected to a power supply.

The activation control module is configured to, when an output voltage of the PV power source at a current time point is greater than a target voltage threshold and greater than an output voltage thereof at a previous time point, output a drive signal to the signal output module to allow the signal output module to output an activation signal to the BMS based on a power supply voltage of the power supply.

The target voltage threshold is configured to characterize a minimum voltage required to activate the BMS.

In an embodiment, the activation control module is further configured to stop outputting the drive signal when the output voltage at the current time point is less than the target voltage threshold, and/or when the output voltage at the current time point is less than or equal to the output voltage at the previous time point.

In an embodiment, the drive signal includes a first drive sub-signal and a second drive sub-signal, and the activation control module includes a voltage detection unit and a step detection unit.

A first input terminal of the voltage detection unit is connected to the PV power source, and a first output terminal of the voltage detection unit is connected to a first input terminal of the signal output module.

The step detection unit is connected in series between a second output terminal of the voltage detection unit and a second input terminal of the signal output module.

The voltage detection unit is configured to, when the output voltage of the PV power source at the current time point is greater than the target voltage threshold, output an intermediate voltage signal to the step detection unit and output a first drive sub-signal to the signal output module. The intermediate voltage signal is positively correlated with the output voltage.

The step detection unit is configured to, when the intermediate voltage signal at the current time point is greater than an intermediate voltage signal at the previous time point, output a second drive sub-signal to the signal output module to allow the signal output module to output the activation signal upon receiving the first drive sub-signal and the second drive sub-signal.

In an embodiment, the voltage detection unit is further configured to, when the output voltage at the current time point is less than the target voltage threshold, stop outputting the intermediate voltage signal and the first drive sub-signal.

And/or the step detection unit is further configured to stop outputting the second drive sub-signal when the intermediate voltage signal at the current time point is less than or equal to the intermediate voltage signal at the previous time point.

In an embodiment, the output terminal of the step detection unit is further connected to a second input terminal of the voltage detection unit.

The voltage detection unit is further configured to, when receiving the second drive sub-signal, continuously output the first drive sub-signal.

In an embodiment, the step detection unit includes a switching circuit, a first charging and discharging circuit, and a second charging and discharging circuit.

An input terminal of the switching circuit is connected to the second output terminal of the voltage detection unit; a first output terminal of the switching circuit is connected to an input terminal of the first charging and discharging circuit, and a second output terminal of the switching circuit is connected to an input terminal of the second charging and discharging circuit; a discharge control terminal of the first charging and discharging circuit is connected to the second output terminal of the voltage detection unit; an output terminal of the second charging and discharging circuit is connected to the second input terminal of the signal output module, or the output terminal of the second charging and discharging circuit is connected to the second input terminal of the signal output module and the second input terminal of the voltage detection unit, respectively.

The switching circuit is configured to, when a voltage difference between the input terminal and the first output terminal of the switching circuit meets a conduction condition, turn on to charge the first charging and discharging circuit and the second charging and discharging circuit, so that the second charging and discharging circuit outputs the second drive sub-signal.

The switching circuit is configured to, when the voltage difference does not meet the conduction condition, be turned off to discharge the first charging and discharging circuit and the second charging and discharging circuit.

In an embodiment, the switching circuit includes a switching transistor Q1; the emitter of the switching transistor Q1 is connected to the second output terminal of the voltage detection unit, the collector of the switching transistor is connected to the second input terminal of the signal output module, and the base of the switching transistor Q1 is connected to the input terminal of the first charging and discharging circuit.

And/or, the first charging and discharging circuit includes a resistor R2, a capacitor C1, a diode D1, and a resistor R1; the resistor R2, the anode of the diode D1, the cathode of the diode D1, and the resistor R1 are connected in series between the first output terminal and the ground terminal of the switching circuit in sequence; and the capacitor C1 is connected in parallel with the resistor R1.

And/or, the second charging and discharging circuit includes a capacitor C2 and a resistor R3, and the capacitor C2 and the resistor R3 are connected in parallel between the second output terminal and the ground terminal of the switching circuit.

In an embodiment, the voltage detection unit includes a Zener diode ZD1, a switching transistor Q4, and a switching transistor Q5.

The cathode of the Zener diode ZD1 is connected to the PV power source, the anode of the Zener diode ZD1 is connected to the collector of the switching transistor Q4 and the base of the switching transistor Q5, respectively; the emitter of the switching transistor Q4 is connected to the output terminal of the step detection unit, and the base of the switching transistor Q4 is connected to the collector of the switching transistor Q5; and the emitter of the switching transistor Q5 is grounded.

In an embodiment, the signal output module includes a switching transistor Q6, a resistor R9, a switching transistor Q3, a resistor R5, a capacitor C4, a switching transistor Q2, a resistor R4, and a capacitor C3.

The emitter of the switching transistor Q6 is connected to the power supply, the base of the switching transistor Q6 is connected to the first output terminal of the voltage detection unit, and the collector of the switching transistor Q6 is connected to the emitter of the switching transistor Q3.

The resistor R9 is connected between the emitter and the base of the switching transistor Q6.

The collector of the switching transistor Q3 is connected to the BMS, and the resistor R5 and the capacitor C4 are connected in series between a base and a ground terminal of the switching transistor Q3 in sequence.

The resistor R4 and the capacitor C3 are connected in series between the output terminal and a ground terminal of the step detection unit.

The collector of the switching transistor Q2 is connected between the resistor R5 and the capacitor C4, the emitter of the switching transistor Q2 is grounded, and the base of the switching transistor Q2 is connected between the resistor R4 and the capacitor C3.

A second aspect of the application further provides a photovoltaic charging system. The photovoltaic charging system includes:
a PV power source;
a battery management system (BMS); and
the PV charging activation circuit of any embodiment above. The PV charging activation circuit is connected to the PV power source and the BMS, respectively.

Details of one or more embodiments of this application are set forth in the following drawings and description. Other features and advantages of this application will become apparent from the specification, drawings, and claims.

### BRIEF DESCRIPTION OF THE DRAWINGS

To more clearly illustrate the technical solutions in the embodiments of this application or the conventional technology, the drawings used in the description of the embodiments or the conventional technology will be briefly described below. Obviously, the drawings described below are only embodiments of this application. For those ordinary skilled in the art, other drawings may be obtained based on the disclosed drawings without creative effort.
FIG. 1 is a first structural schematic view of a photovoltaic charging activation circuit according to one or more embodiments;
FIG. 2 is a second structural schematic view of a photovoltaic charging activation circuit according to one or more embodiments;
FIG. 3 is a third structural schematic view of a photovoltaic charging activation circuit according to one or more embodiments;
FIG. 4 is a fourth structural schematic view of a photovoltaic charging activation circuit according to one or more embodiments;
FIG. 5 is a fifth structural schematic view of a photovoltaic charging activation circuit according to one or more embodiments;
FIG. 6 is a sixth structural schematic view of a photovoltaic charging activation circuit according to one or more embodiments;
FIG. 7 is a seventh structural schematic view of a photovoltaic charging activation circuit according to one or more embodiments;
FIG. 8 is an eighth structural schematic view of a photovoltaic charging activation circuit according to one or more embodiments.

### DETAILED DESCRIPTION OF THE EMBODIMENTS

The technical solutions of the embodiments of this application will be clearly and completely described below with reference to the accompanying drawings of this application. Obviously, the described embodiments are only some embodiments of this application, but not all embodiments. Based on the embodiments of this application, all other embodiments obtained by those ordinary skilled in the art without creative effort are within the scope of protection of this application.

Unless otherwise defined, all technical and scientific terms used herein have the same meaning as commonly understood by one of ordinary skill in the art to which this application belongs. The terminology used herein in the specification of this application is for the purpose of describing particular embodiments only but not intended to limit this application.

It may be understood that the terms "first", "second", etc., used herein may be used to describe various elements, but these elements are not limited by these terms. These terms are only used to distinguish one element from another. For example, without departing from the scope of this application, a first resistor may be referred to as a second resistor, and similarly, a second resistor may be referred to as a first resistor. Both the first resistor and the second resistor are resistors, but they are not the same resistor.

It may be understood that the term "connected" in the following embodiments should be understood as "electrically connected" or "communicatively connected", etc., if the connected circuits, modules, units, etc., have electrical signal or data transmission with each other.

It may be understood that "at least one" refers to one or more, "multiple" refers to two or more, and "at least a part of an element" refers to part or all of an element.

When used herein, the singular forms of "a", "an", and "the/said" may also include the plural forms unless the context clearly indicates otherwise. It should also be understood that the terms "comprise/include" or "have" etc., specifies the presence of the stated features, wholes, steps, operations, components, parts, or combinations thereof, but do not preclude the possibility of the presence or addition of one or more other features, wholes, steps, operations, components, parts, or combinations thereof. Moreover, the term "and/or" as used in this specification includes any and all combinations of the associated listed items.

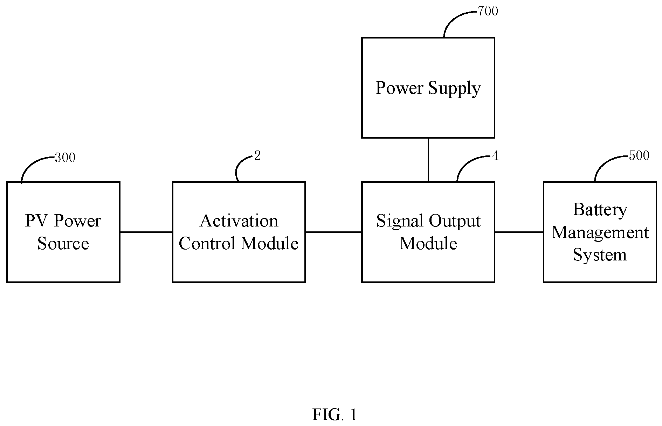

In an exemplary embodiment, as shown in FIG. 1, this application provides a photovoltaic (PV) charging activation circuit, including an activation control module 2 and a signal output module 4. The activation control module 2 and the signal output module 4 are connected in series between a PV power source 300 and a battery management system (BMS) 500 in sequence, and the signal output module 4 is further connected to a power supply 700. The activation control module 2 is configured to, when an output voltage of the PV power source 300 at a current time point is greater than a target voltage threshold and greater than an output voltage thereof at a previous time point, output a drive signal to the signal output module 4, so that the signal output module 4 outputs an activation signal to the BMS 500 based on a power supply voltage of the power supply 700. The target voltage threshold is configured to characterize the minimum voltage to activate the BMS 500.

For example, the output characteristic of the PV power source is that an output voltage thereof varies with light intensity. When lighting conditions change, such as cloud blocking the sun or shadows obstructing sunlight, the output voltage of the PV power source (e.g., solar panels) may become unstable or exhibit fluctuations. In a PV charging system that activates charging based on the output voltage of the PV power source, when the output voltage of the PV power source exceeds the minimum voltage required to activate the BMS, the PV charging system determines that there is sufficient energy to supply power and sends an activation signal to the BMS to start a charging process. However, if the output voltage of the PV power source fluctuates frequently due to environmental factors, the output voltage may repeatedly cross the minimum voltage required to activate the BMS, that is, whenever the output voltage of the PV power source is higher than the minimum voltage required to activate the BMS, the PV charging system will attempt to activate charging, and whenever the output voltage of the PV power source is lower than the minimum voltage required to activate the BMS, the PV charging system will stop charging. Such frequent start-stop cycles not only increase the energy consumption but also reduce the charging efficiency and the service life of the energy storage device.

Based on reasons above, as shown in FIG. 1, the activation control module 2 is configured to sample and record the changes in the output voltage of the PV power source 300 in real time. Only when the current output voltage of the PV power source 300 is greater than the minimum voltage required to activate the BMS 500, and also greater than the output voltage at the previous time point, will the drive signal be outputted to the signal output module 4, so that the signal output module 4 outputs the activation signal to the BMS 500 based on the power supply voltage of the power supply 700. When the output voltage of the PV power source 300 at the current time point is less than or equal to the minimum voltage required to activate the BMS 500, it indicates that the current output voltage does not meet the minimum voltage requirement for activating the BMS 500, and the activation control module 2 will not output a drive signal to activate the BMS 500. When the current output voltage of the PV power source 300 is greater than the minimum voltage required to activate the BMS 500 but less than the output voltage at the previous time point, it indicates that the output voltage of the PV power source 300 may have a decreasing trend over a continuous time period, and the energy provided by the PV power source 300 may be unstable. In this case, the activation control module 2 will not output a drive signal. When the output voltage of the PV power source 300 at the current point is greater than the minimum voltage required to activate the BMS 500, and also greater than the output voltage at the previous time point, it indicates that the output voltage of the PV power source 300 meets the minimum voltage requirement for activating the BMS 500, and exhibits a sustained upward trend over a continuous time period, and that the energy provided by the PV power source 300 is sufficient and stable, then the activation control module 2 will output a drive signal to the signal output module 4, so that the signal output module 4 outputs the activation signal to the BMS 500 based on the power supply voltage of the power supply 700, thereby activating the BMS 500. It should be noted that, for the output voltage of the PV power source 300 first connected, since the output voltage thereof at the previous time point is zero, as long as the output voltage at the current time point is greater than the minimum voltage required to activate the BMS 500, the activation control module 2 will output a drive signal to the signal output module 4 to activate the BMS 500.

A sampling frequency at which the activation control module 2 samples the output voltage of the PV power source 300 can be set according to actual activation precision requirements, and is not limited herein. For example, if it is desired to reduce the activation frequency as much as possible, the sampling frequency can be reduced (i.e., a sampling time interval between the current time point and the previous time point can be increased), so that the charging process is activated only when the energy provided by the PV power source 300 remains stable and has a continuous growth trend over a longer continuous time period.

In the aforementioned PV charging activation circuit, by configuring the activation control module, the output voltage of the PV power source is sampled in real time. Only when the output voltage is higher than the minimum voltage required to activate the BMS, and also higher than the output voltage at the previous time point, will the drive signal be outputted to the signal output module. That is, the charging process will be activated only when the PV power source truly provides stable and continuously increasing energy, thereby reducing the number of invalid starts, achieving reliable activation, and further reducing the energy consumption of the system, improving the charging efficiency, and extending the service life of the energy storage device.

In an exemplary embodiment, the power supply 700 can be a power supply provided by the battery module in the energy storage device. Alternatively, the power supply 700 can be another power supply outside the battery module.

In an exemplary embodiment, the activation control module 2 is further configured to stop outputting a drive signal when the output voltage at the current time point is less than the target voltage threshold, and/or when the output voltage at the current time point is less than or equal to the output voltage at the previous time point.

For example, as described above, when the output voltage of the PV power source 300 at the current time point is less than or equal to the minimum voltage required to activate the BMS 500, it indicates that the current output voltage does not meet the minimum voltage requirement for activating the BMS 500, and the activation control module 2 will not output a drive signal to cause the signal output module 4 to activate the BMS 500. When the output voltage of the PV power source 300 at the current time point is greater than the minimum voltage required to activate the BMS 500 but less than the output voltage at the previous time point, it indicates that the current output voltage may have a decreasing trend over a continuous time period, and the energy provided by the PV power source 300 may be unstable. In this case, the activation control module 2 will not output a drive signal either. Based on this, during the activation process of the BMS 500, when the output voltage at the current time point is less than the target voltage threshold and/or less than or equal to the output voltage at the previous time point, it is needed to stop outputting the drive signal, so as to stop the BMS 500 from operating.

In the embodiment, the activation control module can also stop outputting the drive signal when the output voltage at the current time point is less than the target voltage threshold and/or less than or equal to the output voltage at the previous time point, thereby ensuring that charging begins only when the energy provided by the PV power source is stable and continuously increases throughout the entire charging process, thereby improving the charging efficiency. Moreover, the activation signal will not be continuously outputted during the power supplying process of the PV power source, thereby ensuring that the BMS 500 can be powered off.

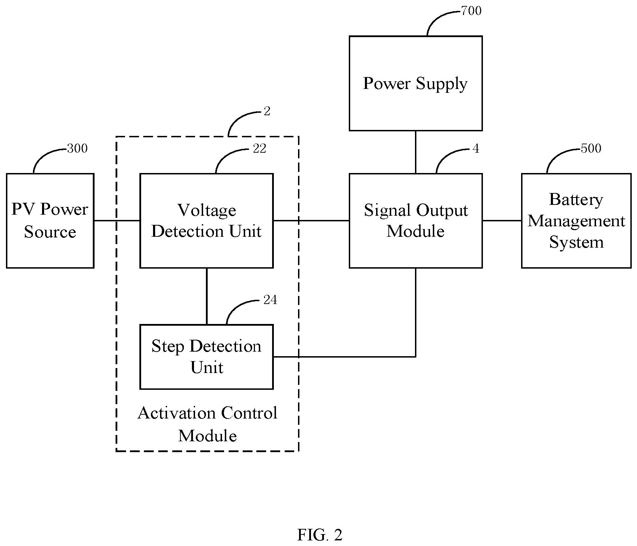

In an exemplary embodiment, as shown in FIG. 2, the drive signal includes a first drive sub-signal and a second drive sub-signal, and the activation control module 2 includes a voltage detection unit 22 and a step detection unit 24. A first input terminal of the voltage detection unit 22 is connected to the PV power source 300, and a first output terminal of the voltage detection unit 22 is connected to a first input terminal of the signal output module 4. The step detection unit 24 is connected in series between a second output terminal of the voltage detection unit 22 and a second input terminal of the signal output module 4. The voltage detection unit 22 is configured to, when the output voltage of the PV power source 300 at the current time point is greater than the target voltage threshold, output an intermediate voltage signal to the step detection unit 24 and output a first drive sub-signal to the signal output module 4. The intermediate voltage signal is positively correlated with the output voltage. The step detection unit 24 is configured to, when the intermediate voltage signal at the current time point is greater than the intermediate voltage signal at the previous time point, output a second drive sub-signal to the signal output module 4, so that the signal output module 4 outputs an activation signal upon receiving the first and second drive sub-signals.

The voltage detection unit 22 is configured to detect whether the output voltage of the PV power source 300 is greater than the target voltage threshold, that is, to determine whether the output voltage of the PV power source 300 is greater than the minimum voltage required to activate the BMS 500. The step detection unit 24 can receive and store the voltage output by the voltage detection unit 22, and is configured to determine whether the voltage outputted by the voltage detection unit 22 at the current time point is compared with the voltage outputted by the voltage detection unit 22 at the previous time point.

For example, the output voltage of the PV power source 300 is inputted to the voltage detection unit 22. The voltage detection unit 22 compares the output voltage of the PV power source 300 received at the current time point with the minimum voltage required to activate the BMS 500. If the output voltage of the PV power source 300 at the current time point is greater than the minimum voltage required to activate the BMS 500, it indicates that the output voltage of the PV power source 300 meets the minimum voltage requirement for activating the BMS 500. Based on this comparison result, the voltage detection unit 22 outputs the first drive sub-signal to the signal output module 4. At the same time, the voltage detection unit 22 also converts the output voltage of the PV power source 300 at the current time point into the intermediate voltage signal and sends the intermediate voltage signal to the step detection unit 24. After receiving the intermediate voltage signal, the step detection unit 24 compares it with the intermediate voltage signal stored in the step detection unit 24 at the previous time point. If the intermediate voltage signal at the current time point is greater than the intermediate voltage signal at the previous time point, it indicates that the output voltage of the PV power source 300 has a sustained upward trend over a continuous time period, and that the energy provided by the PV power source 300 is sufficient and stable, and then the step detection unit 24 outputs the second drive sub-signal to the signal output module. When receiving the first drive sub-signal and the second drive sub-signal simultaneously, the signal output module 4 outputs an activation signal to the BMS 500 based on the power supply voltage of the power supply 700 to complete an activation operation.

In the embodiment, by configuring the voltage detection unit and the step detection unit to jointly determine the magnitude of the output voltage of the PV power source, thereby ensuring that the BMS will be activated only when the output voltage is not only higher than the preset threshold but also has a sustained upward trend, which helps to avoid false activation due to voltage fluctuations, thereby improving the stability and reliability of the system, extending the service life of the BMS, and ensuring the effective energy utilization of the PV system.

In an exemplary embodiment, the voltage detection unit 22 is further configured to, when the output voltage at the current time point is less than the target voltage threshold, stop outputting the intermediate voltage signal and the first drive sub-signal, and/or, the step detection unit is further configured to stop outputting the second drive sub-signal when the intermediate voltage signal at the current time point is less than or equal to the intermediate voltage signal at the previous time point.

For example, when the voltage detection unit 22 detects that the output voltage at the current time point is less than the target voltage threshold, it indicates that the output voltage of the PV power source 300 does not meet the minimum voltage requirement for activating the BMS 500, and the voltage detection unit 22 immediately stops outputting the intermediate voltage signal and the first drive sub-signal. Secondly, even if the output voltage at the current time point is greater than the target voltage threshold, if the step detection unit 24 detects that the intermediate voltage signal at the current time point is less than or equal to the intermediate voltage signal at the previous time point, it indicates that even if the output voltage of the PV power source 300 at the current time point meets the minimum voltage requirement for activating the BMS 500, the output voltage of the PV power source 300 may have a decreasing trend over a continuous time period, and the energy provided by the PV power source 300 may not be stable, and in this case, the step detection unit will stop outputting the second drive sub-signal.

In the embodiment, by an approach of stop outputting the drive signal when the output voltage of the PV power source is lower than the target threshold and/or when the output voltage of the PV power source shows no upward trend, the BMS is effectively prevented from being falsely activated due to unstable or insufficient voltage, thereby ensuring the safety and efficiency of system operation, reducing unnecessary energy consumption, and enhancing the reliability and stability of the entire PV system.

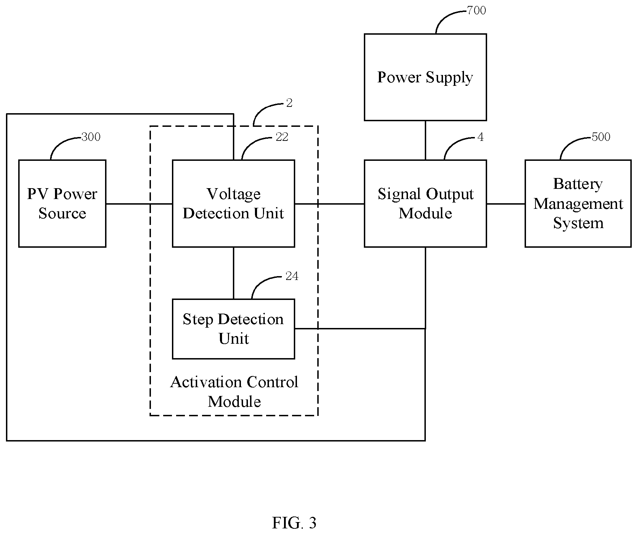

In an exemplary embodiment, as shown in FIG. 3, the output terminal of the step detection unit 24 is also connected to a second input terminal of the voltage detection unit 22. The voltage detection unit 22 is also configured to, when receiving the second drive sub-signal, continuously output the first drive sub-signal.

For example, once determining that the output voltage of the PV power source 300 has a continuous upward trend, the step detection unit 24 outputs the second drive sub-signal. The voltage detection unit 22 receives the second drive sub-signal through the second input terminal and continuously outputs the first drive sub-signal, thus ensuring that the first drive sub-signal is stably outputted after a suitable and stable activation condition is detected. Based on this, the first drive sub-signal, together with the second drive sub-signal, acts on the signal output module 4 to ensure that the signal output module 4 can continuously maintain the generation of the activation signal, thereby ensuring that the BMS 500 is stably activated, and avoiding the problem of system instability or reactivation caused by a signal interruption.

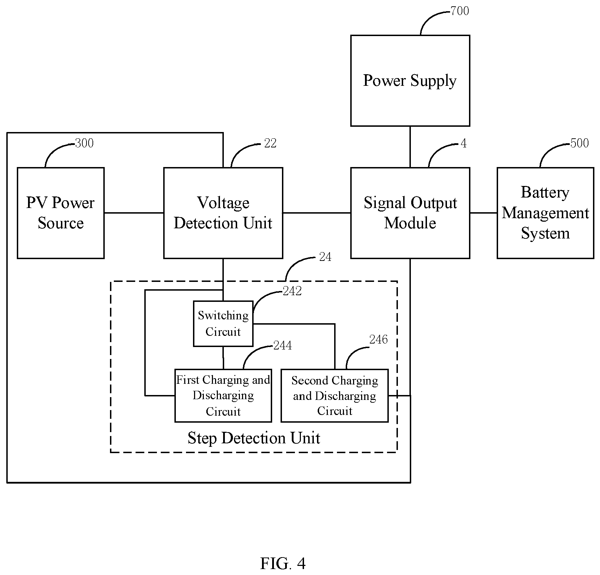

In an exemplary embodiment, as shown in FIG. 4, the step detection unit 24 includes a switching circuit 242, a first charging and discharging circuit 244, and a second charging and discharging circuit 246. An input terminal of the switching circuit 242 is connected to the second output terminal of the voltage detection unit 22, a first output terminal of the switching circuit 242 is connected to an input terminal of the first charging and discharging circuit 244, and a second output terminal of the switching circuit 242 is connected to an input terminal of the second charging and discharging circuit 246. A discharge control terminal of the first charging and discharging circuit 244 is connected to the second output terminal of the voltage detection unit 22. An output terminal of the second charging and discharging circuit 246 is connected to the second input terminal of the signal output module 4, or the output terminal of the second charging and discharging circuit 246 is connected to the second input terminal of the signal output module 4 and the second input terminal of the voltage detection unit 22, respectively. The switching circuit 242 is configured to turn on when a voltage difference between the input terminal and the first output terminal of the switching circuit 242 meets a conduction condition, so as to charge the first charging and discharging circuit 244 and the second charging and discharging circuit 246, so that the second charging and discharging circuit 246 outputs the second drive sub-signal. The switching circuit 242 is configured to be turned off when the voltage difference does not meet the conduction condition, so as to discharge the first charging and discharging circuit 244 and the second charging and discharging circuit 246.

The conduction condition can refer to the voltage difference between the input terminal and the first output terminal of the switching circuit 242 being greater than a preset voltage threshold. The specific preset voltage threshold can be set according to an actual circuit design and is not limited herein.

For example, when the output voltage of the PV power source 300 is first connected, if the output voltage of the PV power source 300 is greater than the target voltage threshold, the voltage detection unit 22 outputs the intermediate voltage signal to the input terminal of the switching circuit 242. Since the intermediate voltage signal is relatively large at this time, the voltage applied to the output terminal of the switching circuit 242 is also relatively large. However, when the output voltage of the PV power source 300 is first connected, since the first charging and discharging circuit 244 has not been charged before, the voltage applied by the first charging and discharging circuit 244 to the first output terminal of the switching circuit 242 is relatively small (almost zero). Therefore, when the output voltage of the PV power source 300 is first connected, as long as the output voltage of the PV power source 300 is greater than the target voltage threshold, then the voltage difference between the input terminal and the first output terminal of the switching circuit 242 satisfies the conduction condition, thus turning on the switching circuit 242. The intermediate voltage signal is applied through the switching circuit 242 to charge the first charging and discharging circuit 244 and the second charging and discharging circuit 246. When the second charging and discharging circuit 246 has been charged for a certain time period and the voltage thereof reaches a certain value, it starts to output the second drive sub-signal to the signal output module 4. In the case that the output terminal of the second charging and discharging circuit 246 is connected to the second input terminal of the signal output module 4 and the second input terminal of the voltage detection unit 22, respectively, the second drive sub-signal outputted by the second charging and discharging circuit 246 can also be outputted to the voltage detection unit 22, so that the voltage detection unit 22 continuously outputs the first drive sub-signal. When the first charging and discharging circuit 244 is fully charged, since the voltage applied by the first charging and discharging circuit 244 to the first output terminal of the switching circuit 242 is equal to the voltage of the input terminal of the switching circuit 242 (i.e., the voltage of the input terminal of the switching circuit 242 and the voltage of the first output terminal of the switching circuit 242 are both applied by the intermediate voltage signal), the switching circuit 242 is turned off because the voltage difference between the input terminal and the first output terminal thereof cannot meet the conduction condition. The second charging and discharging circuit 246 begins to discharge, and the voltage thereof gradually decreases until it stops outputting the second drive sub-signal. Since the discharge control terminal of the first charging and discharging circuit 244 is connected to the second output terminal of the voltage detection unit 22, the voltage at the discharge control terminal of the first charging and discharging circuit 244 is equal to the voltage applied by the intermediate voltage signal. Therefore, the first charging and discharging circuit 244 cannot discharge at this time and remains at the voltage applied by the intermediate voltage signal, and the switching circuit 242 keeps in the off state, so as to prevent the switching transistor from being frequently turned on, which is caused by a premature discharge of the first charging and discharging circuit 244, and which would cause the second charging and discharging circuit 246 to frequently output the second drive sub-signal to the signal output module 4.

When the output voltage of the PV power source 300 at the next time point (relative to the output voltage of the PV power source 300 first connected) is greater than the target voltage threshold and greater than the output voltage of the PV power source 300 first connected, the voltage detection unit 22 outputs the intermediate voltage signal to the input terminal of the switching circuit 242. As described above, since the voltage at the input terminal of the switching circuit 242 and the voltage at the first output terminal of the switching circuit 242 are both equal to the voltage applied by the intermediate voltage signal when the first charging and discharging circuit 244 is fully charged, in order to enable the voltage difference between the input terminal and the first output terminal of the switching circuit 242 to meet the conduction condition again, the intermediate voltage signal outputted in this case (at the next time point) must at least meet the intermediate voltage signal outputted when the output voltage of the PV power source 300 is first connected. Since the output voltage of the PV power source 300 at the next time point is greater than the output voltage of the PV power source 300 first connected, that is, the intermediate voltage signal outputted at the next time point is also greater than the intermediate voltage signal outputted when it is first connected, the switching circuit 242 is turned on again, and the intermediate voltage signal charges the first charging and discharging circuit 244 and the second charging and discharging circuit 246 through the switching circuit 242. When the second charging and discharging circuit 246 has been charged for a certain time period and the voltage thereof reaches a certain value, it outputs the second drive sub-signal.

When the output voltage of the PV power source 300 at the next time point (relative to the output voltage of the PV power source 300 first connected) is greater than the target voltage threshold but less than the output voltage of the PV power source 300 first connected, the intermediate voltage signal output at the next time point is also less than the intermediate voltage signal outputted when the PV power source is first connected, then the voltage difference between the input terminal and the first output terminal of the switching circuit 242 does not meet the conduction condition, the switching circuit 242 is turned off, and the second charging and discharging circuit 246 starts to discharge until it stops outputting the second drive sub-signal. Meanwhile, since the intermediate voltage signal outputted at the next time point is less than the intermediate voltage signal outputted when the PV power source is first connected, that is, the voltage of the discharge control terminal of the first charging and discharging circuit 244 at the next time point is less than the voltage of the first charging and discharging circuit 244 fully charged, the first charging and discharging circuit 244 starts to discharge until the voltage of the first charging and discharging circuit 244 drops to be equal to the voltage of the discharge control terminal of the first charging and discharging circuit 244, so that when a next output voltage of the PV power source 300 is greater than "the output voltage of the PV power source 300 at the next time point", the switching circuit 242 can be turned on again to charge the second charging and discharging circuit 246 to output the second drive sub-signal.

In the embodiment, the design of the switching circuit and two charging and discharging circuits (i.e., the first charging and discharging circuit and the second charging and discharging circuit) enables more accurate judgment of the changing trend of the output voltage of the PV power source, and determines to activate the BMS or not accordingly, which not only ensures that the BMS is activated when the output voltage of the PV power source continues to rise, thereby avoiding the problem of false activation caused by instantaneous voltage fluctuations, but also effectively prevents the switching circuit from being turned on or off frequently through the discharge control mechanism of the first charging and discharging circuit, thereby preventing the second charging and discharging circuit from frequently outputting the second drive sub-signal, and protecting the circuit from unnecessary stress damages, and extending the service life of the equipment.

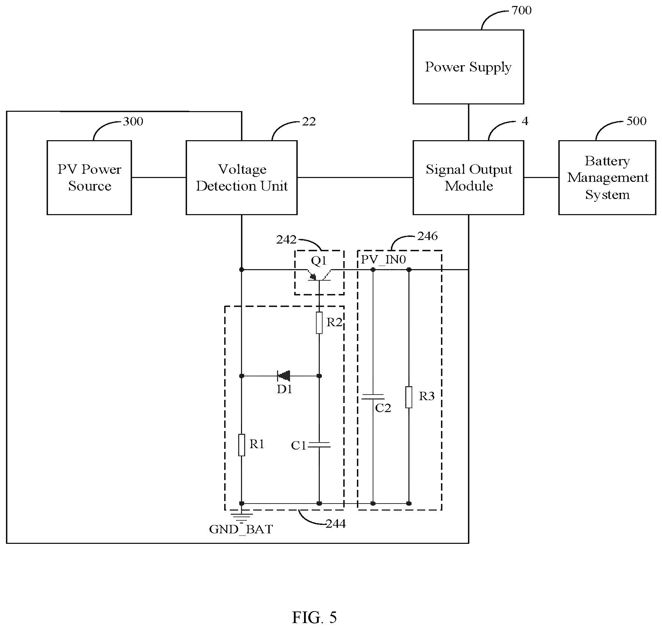

In an exemplary embodiment, as shown in FIG. 5, the switching circuit 242 includes a switching transistor Q1. The emitter of the switching transistor Q1 is connected to the second output terminal of the voltage detection unit 22, the collector of the switching transistor is connected to the second input terminal of the signal output module 4, and the base of the switching transistor Q1 is connected to the input terminal of the first charging and discharging circuit 244. And/or, the first charging and discharging circuit 244 includes: a resistor R2, a capacitor C1, a diode D1, and a resistor R1. The resistor R2, the anode of the diode D1, the cathode of the diode D1, and the resistor R1 are connected in series between the first output terminal and the ground terminal of the switching circuit 242 in sequence. The cathode of the diode D1 is also connected to the second output terminal of the voltage detection unit 22, and the capacitor C1 is connected in parallel with the resistor R1. And/or, the second charging and discharging circuit 246 includes: a capacitor C2 and a resistor R3. The capacitor C2 and the resistor R3 are connected in parallel between the second output terminal and the ground terminal of the switching circuit 242.

Where, the switching transistor Q1 can be a PNP transistor.

For example, when the output voltage of the PV power source 300 is first connected, if the output voltage of the PV power source 300 is greater than the target voltage threshold, the voltage detection unit 22 outputs an intermediate voltage signal to the emitter of the switching transistor Q1. Since the voltage applied by the intermediate voltage signal is relatively large at this time, the voltage applied to the emitter of the switching transistor Q1 is also relatively large. However, when the output voltage of the PV power source 300 is first connected, since the capacitor C1 has not been charged before, the voltage applied by the capacitor C1 to the base of the switching transistor Q1 is relatively small (almost zero). Therefore, when the output voltage of the PV power source 300 is first connected, as long as the output voltage of the PV power source 300 is greater than the target voltage threshold, the voltage difference between the emitter and the base of the switching transistor Q1 satisfies the conduction condition, and the switching transistor Q1 is turned on. The intermediate voltage signal charges the capacitor C1 and the capacitor C2 through the switching transistor Q1. After being charged for a certain time period, and when the voltage thereof reaches a certain value, the capacitor C2 outputs the second drive sub-signal to the signal output module 4. When the capacitor C2 is connected to the second input terminal of the signal output module 4 and the second input terminal of the voltage detection unit 22, respectively, the second drive sub-signal outputted by the capacitor C2 can also be outputted to the voltage detection unit 22, so that the voltage detection unit 22 continuously outputs the first drive sub-signal. When the capacitor C1 is fully charged, since the voltage applied by the capacitor C1 to the base of the switching transistor Q1 is equal to the voltage of the emitter of the switching transistor Q1 (i.e., the voltages of the emitter and the base of the switching transistor Q1 are both applied by the intermediate voltage signal), the switching transistor Q1 is turned off because the voltage difference between the emitter and the base thereof cannot meet the conduction condition, the capacitor C2 begins to discharge through the resistor R3, and the voltage thereof gradually decreases until the output of the second drive sub-signal stops. Since the cathode of the diode D1 is also connected to the second output terminal of the voltage detection unit 22, the voltage of the cathode of diode D1 is equal to the voltage applied by the intermediate voltage signal. Therefore, the capacitor C1 cannot discharge and remains at the voltage applied by the intermediate voltage signal, and the switching transistor Q1 keeps in the off state, thereby preventing the switching transistor Q1 from being frequently turned on, which is caused by a premature discharge of the capacitor C1, and which would cause the capacitor C2 to frequently output the second drive sub-signal to the signal output module 4.

When the output voltage of the PV power source 300 at the next time point (relative to the output voltage of the PV power source 300 first connected) is greater than the target voltage threshold and greater than the output voltage of the PV power source 300 first connected, the voltage detection unit 22 outputs the intermediate voltage signal to the emitter of the switching transistor Q1. As described above, since the voltages of the emitter and the base of the switching transistor Q1 are both equal to the voltage applied by the intermediate voltage signal when the capacitor C1 is fully charged, in order to enable the voltage difference between the emitter and the base of the switching transistor Q1 to meet the conduction condition again, the intermediate voltage signal outputted in this case (at the next time point) must at least meet the intermediate voltage signal outputted when the output voltage of the PV power source 300 is first connected. Since the output voltage of the PV power source 300 at the next time point is greater than the output voltage of the PV power source 300 first connected, that is, the intermediate voltage signal output at the next time point is also greater than the intermediate voltage signal outputted when it was first connected, the switching transistor Q1 is turned on again, and the intermediate voltage signal charges the capacitor C1 and the capacitor C2 through the switching transistor Q1. When the capacitor C2 has been charged for a certain time period and the voltage thereof reaches a certain value, it outputs the second drive sub-signal.

When the output voltage of the PV power source 300 at the next time point (relative to the output voltage of the PV power source 300 first connected) is greater than the target voltage threshold but less than the output voltage of the PV power source 300 first connected, the intermediate voltage signal outputted at the next time point is also less than the intermediate voltage signal outputted when the PV power source is first connected, and then the voltage difference between the emitter and the base of the switching transistor Q1 does not meet the conduction condition, the switching transistor Q1 is turned off, and the capacitor C2 begins to discharge through the resistor R3 until the capacitor C2 stops outputting the second drive sub-signal. Meanwhile, since the intermediate voltage signal outputted at the next time point is less than the intermediate voltage signal outputted when the PV power source is first connected, that is, the voltage of the cathode of the diode D1 at the next time point is less than the voltage of the capacitor C1 fully charged when the PV power source 30 is first connected, the capacitor C1 begins to discharge through the resistor R1 until the voltage thereof drops to be equal to the voltage of the cathode of diode D1, so that when the next output voltage of the PV power source 300 is greater than "the output voltage of the PV power source 300 at the next time point", the switching transistor Q1 can be turned on again to charge the capacitor C2 to output the second drive sub-signal.

In the embodiment, by controlling the charging process of the capacitor C1 and the capacitor C2 through the switching transistor Q1, the second drive sub-signal can be stably outputted when the output voltage of the PV power source steadily increases, thereby continuously activating the BMS. Moreover, by limiting the discharge condition of the capacitor C1, the switching transistor Q1 is prevented from being turned on and off frequently, thereby reducing the risk of malfunctions caused by voltage fluctuations, enhancing the stability and reliability of the system, ensuring the efficient operation of the PV system during the activation of the BMS, and reducing the additional energy consumption and potential hardware damage risks caused by frequent activation.

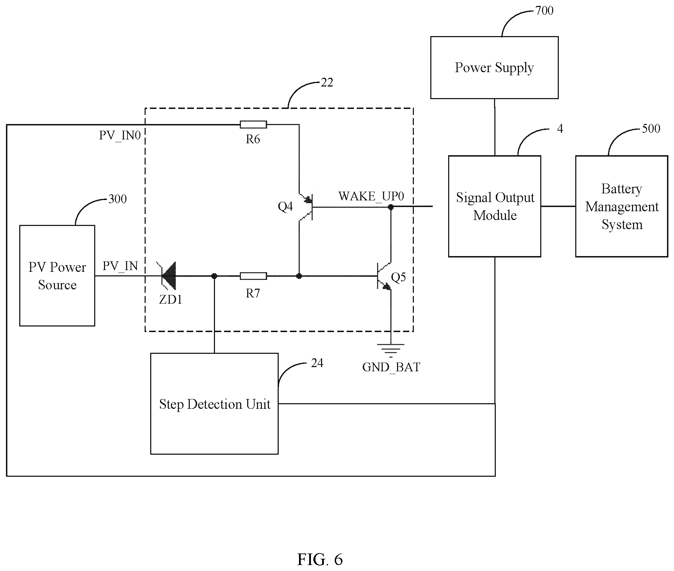

In an exemplary embodiment, as shown in FIG. 6, the voltage detection unit 22 includes a Zener diode ZD1, a switching transistor Q4, and a switching transistor Q5. The cathode of the Zener diode ZD1 is connected to the PV power source 300, the anode of the Zener diode ZD1 is connected to the collector of the switching transistor Q4 and the base of the switching transistor Q5, the emitter of the switching transistor Q4 is connected to the output terminal of the step detection unit 24, the base of the switching transistor Q4 is connected to the collector of the switching transistor Q5, and the emitter of the switching transistor Q5 is grounded.

The switching transistor Q4 can be a PNP transistor, and the switching transistor Q5 can be an NPN transistor. To meet circuit design requirements, the voltage detection unit 22 also includes a resistor R7 and a resistor R6, the specific connection relationship of which can be seen in FIG. 6 and will not be repeatedly described herein. The Zener diode ZD1 and the resistor R7 are configured to set the target voltage threshold, and if the voltage is less than the target threshold, the BMS 500 cannot be activated. The resistor R6 is a current-limiting resistor, which restricts the current supplied by the output voltage of the PV power source 300 from flowing through the base of the switching transistor Q4 and the base of the switching transistor Q5.

For example, when the output voltage of the PV power source 300 (i.e., the voltage PV_IN) is greater than the reverse breakdown voltage of the Zener diode ZD1, the Zener diode ZD1 conducts, and the current flows through the resistor R7 and the base of the switching transistor Q5. The switching transistor Q5 is then turned on, thus outputting the first drive sub-signal (i.e., the signal WAKE_UP0). In the case that the switching transistor Q4 is connected to the output terminal of the step detection unit 24 through the resistor R6, since both the switching transistor Q5 and the switching transistor Q4 are configured in a thyristor structure, under the action of the second drive sub-signal (i.e., the signal PV_IN0) outputted by the step detection unit 24, the switching transistor Q4is turned on, and the voltage PV_IN0 pulls up the base of the switching transistor Q5, thus ensuring reliable conduction of the switching transistor Q5, i.e., continuously outputting a valid first drive sub-signal (the signal WAKE_UP0 is active-low).

In the embodiment, when the output voltage of the PV power source exceeds the target voltage threshold, the Zener diode ZD1 conducts, triggering the switching transistor Q5 to output the first drive sub-signal (i.e., the signal WAKE_UP0). Under the action of the second drive sub-signal (i.e., the signal PV_IN0) outputted by the step detection unit, the switching transistor Q4 is ensured to be turned on, thereby further ensuring the output of the first drive sub-signal, and ensuring that the BMS will be activated only when the PV power source provides a sufficient and stable voltage, and reducing unnecessary activation attempts.

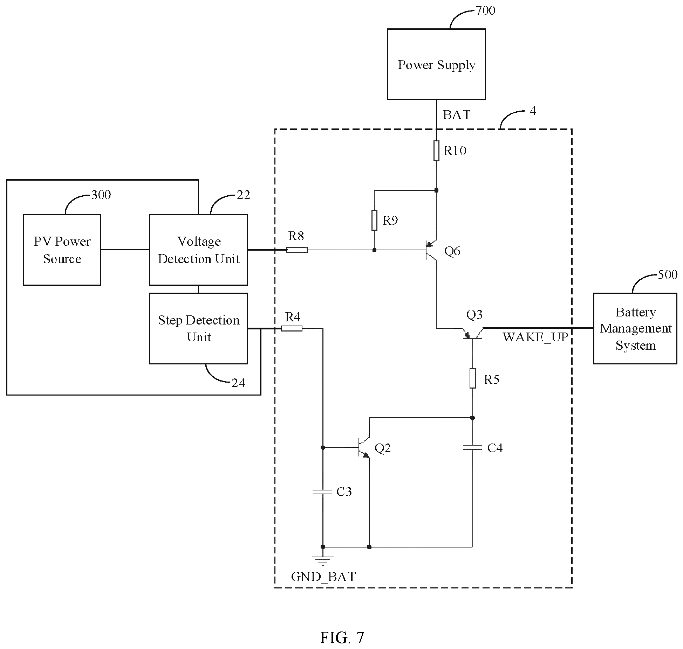

In an exemplary embodiment, as shown in FIG. 7, the signal output module 4 includes a switching transistor Q6, a resistor R9, a switching transistor Q3, a resistor R5, a capacitor C4, a switching transistor Q2, a resistor R4, and a capacitor C3. The emitter of the switching transistor Q6 is connected to the power supply 700, the base of the switching transistor Q6 is connected to the first output terminal of the voltage detection unit 22, and the collector of the switching transistor Q6 is connected to the emitter of the switching transistor Q3. The resistor R9 is connected between the emitter and the base of the switching transistor Q6. The collector of the switching transistor Q3 is connected to the BMS 500, and the resistor R5 and the capacitor C4 are connected in series between the base and the ground terminal of the switching transistor Q3 in sequence. The resistor R4 and the capacitor C3 are connected in series between the output terminal and the ground terminal of the step detection unit 24 in sequence. The collector of the switching transistor Q2 is connected between the resistor R5 and the capacitor C4, the emitter of the switching transistor Q2 is grounded, and the base of the switching transistor Q2 is connected between the resistor R4 and the capacitor C3.

The switching transistor Q6 and the switching transistor Q3 can be PNP transistors. The switching transistor Q2 can be an NPN transistor. To meet the circuit design requirements, the voltage detection unit 22 also includes the resistor R8 and the resistor R10, the specific connection relationship of which can be seen in FIG.7 and will not be described repeatedly herein.

For example, when the output voltage of the PV power source 300 at the current time point is greater than the target voltage threshold and greater than the output voltage at the previous time point, the voltage detection unit 22 outputs the valid first drive sub-signal to the signal output module 4. Simultaneously, the step detection unit 24 outputs the second drive sub-signal to the signal output module 4 and the voltage detection unit 22. Upon receiving the second drive sub-signal, the voltage detection unit 22 continuously output the valid first drive sub-signal. After the signal output module 4 receives the first drive sub-signal from the voltage detection unit 22, the switching transistor Q6 and the switching transistor Q3 are turned on. After the signal output module 4 receives the second drive sub-signal, the second drive sub-signal flows through the resistor R4, the capacitor C3, and the base of the switching transistor Q2, and the switching transistor Q2 turns on. The current from the power supply 700 flows through the current-limiting resistor R10, the emitter and the collector of the switching transistor Q6, the emitter and the base of the switching transistor Q3, the resistor R5, and the collector and the emitter of the switching transistor Q2 to ground, and at this time, a valid activation signal is outputted to the BMS 500 (i.e., WAKE_UP is a high level).

When the step detection unit 24 stops outputting the second drive sub-signal, the switching transistor Q2 is turned off, and the current from the power supply 700 flows through the current-limiting resistor R10, the emitter and the collector of the switching transistor Q6, the emitter and the base of the switching transistor Q3, and the resistor R5 to charge the capacitor C4. After the capacitor C4 is fully charged, the switching transistor Q3 is turned off, and stops outputting the activation signal to the BMS 500 (i.e., WAKE_UP is a low level).

When the voltage detection unit 22 stops outputting the first drive sub-signal (e.g., when the output voltage of the PV power source 300 at the current time point is less than the target voltage threshold), the base voltage of the switching transistor Q6 of the signal output module 4 is pulled up to the voltage of the power supply 700 by the resistor R9, the switching transistor Q6 is turned off, and the switching transistor Q3 is also turned off. At this time, the output of the activation signal to the BMS 500 will also be halted (i.e., WAKE_UP is a low level).

In the embodiment, by using the different operating states of the switching transistors Q6, Q3, and Q2, combined with the filtering and delay circuit composed of resistors and capacitors, an effective activation signal path is formed only when the system detects suitable voltage conditions, thereby avoiding false activation caused by voltage fluctuations and enhancing the stability and reliability of the system.

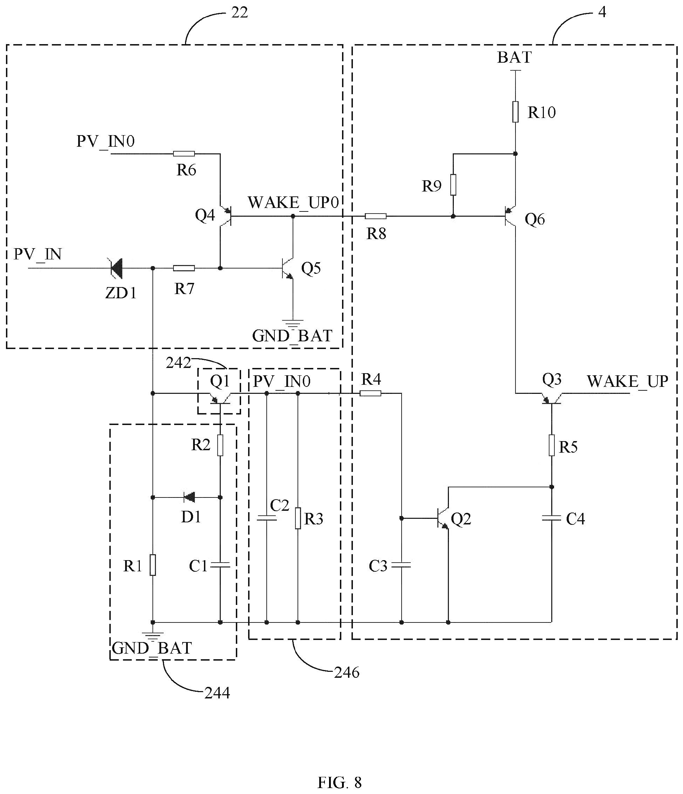

In a specific embodiment, in order to describe the solutions of the application in more detail, description is provided below with reference to FIG. 8. The detailed schematic diagram of a circuit structure is shown in FIG. 8, and will not be repeatedly described herein. The implementation principle thereof is as follows.

When the output voltage PV_IN of the PV power source 300 is greater than the target voltage threshold (i.e., the reverse breakdown voltage of the Zener diode ZD1), the Zener diode ZD1 breaks down. The voltage PV_IN then charges the capacitor C1 through the Zener diode ZD1, the base of the PNP transistor Q1, and the resistor R2. The conduction time of the PNP transistor Q1 is set by setting the charging time constant of the resistor R2 and the capacitor C1. When the PNP transistor Q1 is turned on, the voltage PV_IN charges the capacitor C2 through the Zener diode ZD1, the emitter and the collector of the PNP transistor Q1. The voltage across the capacitor C2 is equal to the voltage PV_IN minus the reverse breakdown voltage of the Zener diode ZD1. When the energy storage capacitor C2 is energized and the voltage thereof reaches a set value, the current flows through the resistor R4 and the base of the NPN transistor Q2, and the NPN transistor Q2 turns on. After the output voltage PV_IN of the PV power source 300 breaks down the Zener diode ZD1, the current also flows through the resistor R7 and the base of the NPN transistor Q5, and the NPN transistor Q5 turns on. The NPN transistor Q5 and the PNP transistor Q4 are configured in thyristor structures. Immediately after the PNP transistor Q4 is turned on, under the action of the voltage PV_IN0 of the capacitor C2, the base voltage of the NPN transistor Q5 is pulled up, thereby ensuring that the NPN transistor Q5 is reliably turned on, that is, the valid signal WAKE_UP0 is outputted (i.e., the WAKE_UP0 signal is a low level).

After the signal output module 4 receives the valid signal WAKE_UP0, the PNP transistor Q6 turns on, and the current supplied by the power supply voltage BAT of the power supply 700 flows through the current-limiting resistor R10, the emitter and the collector of the PNP transistor Q6, the emitter and the base of the PNP transistor Q3, the resistor R5, and the collector and the emitter of the NPN transistor Q2, and flows to the ground terminal, thereby outputting the valid activation signal WAKE_UP (i.e., the WAKE_UP signal is a high level).

When the input voltage PV_IN is stable (i.e., the capacitor C1 is fully charged), or when the voltage PV_IN drops, the PNP transistor Q1 is turned off, and the resistor R3 begins to discharge the electrical charges on the capacitor C2. The voltage of the capacitor C2 is discharged to be less than the minimum turn-on voltage of the NPN transistor Q2, and the NPN transistor Q2 is turned off. The current supplied by the power supply voltage BAT of the power supply 700 flows through the current-limiting resistor R10, the emitter and the collector of the PNP transistor Q6, the emitter and the base of the PNP transistor Q3, and the resistor R5 to charge the capacitor C4. After the capacitor C4 is fully charged, the PNP transistor Q3 is turned off, and the signal output module 4 outputs an invalid activation signal WAKE_UP (i.e., the WAKE_UP signal is a low level).

When the output voltage PV_IN of the PV power source 300 is less than the target voltage threshold, the signal WAKE_UP0 is a high-level signal, i.e., an invalid signal WAKE_UP0. In this case, the base voltage of the PNP transistor Q6 is pulled up by the resistor R9 to the power supply voltage BAT of the power supply 700, the PNP transistor Q6 is turned off, and the PNP transistor Q3 is turned off at the same time, and the signal output module 4 outputs the invalid activation signal WAKE_UP (that is, the signal WAKE_UP is a low level).

A bleeder circuit is formed by the diode D1 and the resistor R1 to achieve the purpose that the voltage of the capacitor C1 is discharged through the diode D1 and the resistor R1 when the voltage PV_IN drops, which ensures that whenever the voltage PV_IN decreases, the voltage across the capacitor C1 remains close to the voltage PV_IN minus the reverse breakdown voltage of Zener diode ZD1, so that when the voltage PV_IN rises again, the voltage PV_IN charges the capacitor C1 through the Zener diode ZD1, the emitter and the base of the PNP transistor Q1, and the resistor R2. At this time, the voltage PV_IN minus the reverse breakdown voltage of the Zener diode ZD1 is greater than the voltage across the capacitor C1. The PNP transistor Q1 is turned on, and the voltage PV_IN charges the capacitor C2 through the Zener diode ZD1 and the PNP transistor Q1. In other words, by using this bleeder circuit, each time the voltage PV_IN shows an upward trend, the capacitor C2 is energized, thus turning on the NPN transistor Q2.

In the embodiment, the hardware circuit cleverly and accurately determines when the input voltage PV_IN rises, a valid activation pulse signal is reliably outputted to activate the BMS, thereby avoiding frequent activation signal outputs when the voltage PV_IN fluctuates. Furthermore, the activation signal disappears after the input voltage PV_IN stabilizes, allowing the BMS to shut down normally.

In an exemplary embodiment, this application also provides a PV charging system including a PV power source, a BMS, and a PV charging activation circuit as described in the above embodiments. The PV charging activation circuit is connected to the PV power source and the BMS, respectively.

In an embodiment, an integrated PV charging system is provided. By introducing the PV charging activation circuit described above, it is ensured that the PV power source can activate the BMS only when specific voltage conditions are met, thereby effectively avoiding malfunctions caused by voltage instability, and improving the reliability and the energy efficiency of the system.

The technical features of the above embodiments can be combined in any way. For the sake of brevity, not all possible combinations of the technical features in the above embodiments are described. However, as long as there is no contradiction in the combinations of these technical features, these combinations should be considered to be within the scope of this specification.

The embodiments described above are merely illustrative of several implementations of this application. Although the descriptions of the embodiments are relatively specific and detailed, they should not be construed as limiting the scope of the patent application. It should be noted that, for those ordinary skilled in the art, various modifications and improvements can be made without departing from the concept of this application, and all these modifications and improvements fall within the protection scope of this application. Therefore, the protection scope of this patent application should be determined by the appended claims.

## Claims

1. A photovoltaic (PV) charging activation circuit, **characterized by** comprising an activation control module and a signal output module;
wherein the activation control module and the signal output module are connected in series between a PV power source and a battery management system (BMS) in sequence, and the signal output module is further connected to a power supply;
the activation control module is configured to, when an output voltage of the PV power source at a current time point is greater than a target voltage threshold and greater than an output voltage thereof at a previous time point, output a drive signal to the signal output module to allow the signal output module to output an activation signal to the BMS based on a power supply voltage of the power supply;
wherein the target voltage threshold is configured to characterize a minimum voltage required to activate the BMS.

2. The PV charging activation circuit according to claim 1, wherein the activation control module is further configured to stop outputting the drive signal when the output voltage at the current time point is less than the target voltage threshold, and/or when the output voltage at the current time point is less than or equal to the output voltage at the previous time point.

3. The PV charging activation circuit according to claim 1, wherein the drive signal comprises a first drive sub-signal and a second drive sub-signal, and the activation control module comprises a voltage detection unit and a step detection unit;
a first input terminal of the voltage detection unit is connected to the PV power source, and a first output terminal of the voltage detection unit is connected to a first input terminal of the signal output module;
the step detection unit is connected in series between a second output terminal of the voltage detection unit and a second input terminal of the signal output module;
the voltage detection unit is configured to, when the output voltage of the PV power source at the current time point is greater than the target voltage threshold, output an intermediate voltage signal to the step detection unit and output a first drive sub-signal to the signal output module; the intermediate voltage signal is positively correlated with the output voltage; and
the step detection unit is configured to, when the intermediate voltage signal at the current time point is greater than an intermediate voltage signal at the previous time point, output a second drive sub-signal to the signal output module to allow the signal output module to output the activation signal upon receiving the first drive sub-signal and the second drive sub-signal.

4. The PV charging activation circuit according to claim 3, wherein the voltage detection unit is further configured to, when the output voltage at the current time point is less than the target voltage threshold, stop outputting the intermediate voltage signal and the first drive sub-signal; and/or
the step detection unit is further configured to stop outputting the second drive sub-signal when the intermediate voltage signal at the current time point is less than or equal to the intermediate voltage signal at the previous time point.

5. The PV charging activation circuit according to claim 3, wherein the output terminal of the step detection unit is further connected to a second input terminal of the voltage detection unit; and
the voltage detection unit is further configured to, when receiving the second drive sub-signal, continuously output the first drive sub-signal.

6. The PV charging activation circuit according to any one of claims 3-5, wherein the step detection unit comprises a switching circuit, a first charging and discharging circuit, and a second charging and discharging circuit;
an input terminal of the switching circuit is connected to the second output terminal of the voltage detection unit; a first output terminal of the switching circuit is connected to an input terminal of the first charging and discharging circuit, and a second output terminal of the switching circuit is connected to an input terminal of the second charging and discharging circuit; a discharge control terminal of the first charging and discharging circuit is connected to the second output terminal of the voltage detection unit; an output terminal of the second charging and discharging circuit is connected to the second input terminal of the signal output module, or the output terminal of the second charging and discharging circuit is connected to the second input terminal of the signal output module and the second input terminal of the voltage detection unit, respectively;
the switching circuit is configured to, when a voltage difference between the input terminal and the first output terminal of the switching circuit meets a conduction condition, turn on to charge the first charging and discharging circuit and the second charging and discharging circuit, so that the second charging and discharging circuit outputs the second drive sub-signal; and
the switching circuit is configured to, when the voltage difference does not meet the conduction condition, be turned off to discharge the first charging and discharging circuit and the second charging and discharging circuit.

7. The PV charging activation circuit according to claim 6, wherein the switching circuit comprises a switching transistor Q1; the emitter of the switching transistor Q1 is connected to the second output terminal of the voltage detection unit, the collector of the switching transistor is connected to the second input terminal of the signal output module, and the base of the switching transistor Q1 is connected to the input terminal of the first charging and discharging circuit; and/or
the first charging and discharging circuit comprises a resistor R2, a capacitor C1, a diode D1, and a resistor R1; the resistor R2, the anode of the diode D1, the cathode of the diode D1, and the resistor R1 are connected in series between the first output terminal and the ground terminal of the switching circuit in sequence; and the capacitor C1 is connected in parallel with the resistor R1; and/or
the second charging and discharging circuit comprises a capacitor C2 and a resistor R3, and the capacitor C2 and the resistor R3 are connected in parallel between the second output terminal and the ground terminal of the switching circuit.

8. The PV charging activation circuit according to claim 3, wherein the voltage detection unit comprises a Zener diode ZD1, a switching transistor Q4, and a switching transistor Q5; and
the cathode of the Zener diode ZD1 is connected to the PV power source, the anode of the Zener diode ZD1 is connected to the collector of the switching transistor Q4 and the base of the switching transistor Q5, respectively; the emitter of the switching transistor Q4 is connected to an output terminal of the step detection unit, and the base of the switching transistor Q4 is connected to the collector of the switching transistor Q5; and the emitter of the switching transistor Q5 is grounded.

9. The PV charging activation circuit according to claim 3, wherein the signal output module comprises a switching transistor Q6, a resistor R9, a switching transistor Q3, a resistor R5, a capacitor C4, a switching transistor Q2, a resistor R4, and a capacitor C3;
the emitter of the switching transistor Q6 is connected to the power supply, the base of the switching transistor Q6 is connected to the first output terminal of the voltage detection unit, and the collector of the switching transistor Q6 is connected to the emitter of the switching transistor Q3;
the resistor R9 is connected between the emitter and the base of the switching transistor Q6;
the collector of the switching transistor Q3 is connected to the BMS, and the resistor R5 and the capacitor C4 are connected in series between the base and a ground terminal of the switching transistor Q3 in sequence;
the resistor R4 and the capacitor C3 are connected in series between an output terminal and a ground terminal of the step detection unit; and
the collector of the switching transistor Q2 is connected between the resistor R5 and the capacitor C4, the emitter of the switching transistor Q2 is grounded, and the base of the switching transistor Q2 is connected between the resistor R4 and the capacitor C3.

10. A photovoltaic (PV) charging system, **characterized by** comprising:
a PV power source;
a battery management system (BMS); and
the PV charging activation circuit according to any one of claims 1-9, wherein the PV charging activation circuit is connected to the PV power source and the BMS, respectively.
